# EUROPEAN PATENT SPECIFICATION

(11) **EP 4 321 419 B1**
(45) Date of publication and mention of the grant of the patent: **05.03.2025**
(21) Application number: 22189930.5
(22) Date of filing: 11.08.2022
(51) Int. Cl.: B62J 45/40, B62J 45/412, B62J 45/414, B62K 3/04

(54) **BICYCLE**
FAHRRAD
BICYCLETTE

(43) Date of publication of application: 14.02.2024
(73) Proprietor: Porsche eBike Performance d.o.o., 10000 Zagreb (HR)
(72) Inventor: Smoljkic, Gabrijel, 10430 Samobor (HR); Meister, Jan Marius, 10 000 Zagreb (HR)
(74) Representative: Sturm, Christoph

(56) References cited:
- WO-A2-2004/046886
- US-A1- 2019 256 162

## Description

The invention relates to a bicycle comprising a bicycle frame, a rear wheel and a front wheel rotatably supported on the bicycle frame, a camera device for recording the bicycle environment during a ride, a sensor device for recording ride data, and a recording memory device for storing recordings recorded by the camera device and the ride data corresponding in time recorded by the sensor device.

The structure of a bicycle having a bicycle frame, a rear wheel, and a front wheel is generally known, wherein the front wheel is rotatably supported at the bicycle frame via a front fork fixedly connected to a handlebar, and the rear wheel is rotatably supported at the bicycle frame via a rear wheel assembly. A bicycle with an electric drive unit to assist the rider in riding, also known as a pedelec, is constructed accordingly. Thus, a pedelec is also understood to be a bicycle.

It is generally known that, for example, riding data is recorded during the ride via bicycle computers, i.e. via a sensor device. In particular, the riding speed and the riding route are recorded and displayed to the rider. The riding data can also be stored for evaluation at a later time. A bicycle computer of this type is disclosed, for example, in DE 10 2004 044 545 A1.

It is also known that rides on a bicycle, in particular rides involving special maneuvers, such as riding a mountain bike off-road, are recorded via a camera device in order to record special events pictorially during the ride. The recordings are stored in a recording memory device. Such a bicycle with a camera device is disclosed, for example, in WO 2016 / 131 104 A1.

US 2019 / 0 256 162 A1 discloses another bicycle comprising a bicycle frame, a rear wheel and a front wheel rotatably supported on the bicycle frame, a camera device for recording the bicycle environment during a ride, a sensor device for recording ride data, and a recording memory device for storing recordings recorded by the camera device and the ride data corresponding in time recorded by the sensor device.

The problem here is that the special and recording-relevant events occur sporadically during the ride and the recording by the camera device is usually only started when the recording-relevant event, for example a particularly spectacular jump, has at least partially ended. It is also known that a future special event is detected by means of the riding data and the camera device is automatically activated. In this case, the recording by the camera device takes place from the detection of the event, so that the riding operation lying in the future is recorded starting from the detection of the event. The disadvantage of this is that even with such a procedure, the beginning of the event, which is used to activate the camera device, is also not recorded and thus, if necessary, a decisive moment of the driving maneuver to be recorded is not recorded.

The problem of the invention is to provide a bicycle with which special driving events occurring during riding with the bicycle are reliably and completely recorded.

The problem is solved by a bicycle according to claim 1.

By the fact that the camera device permanently records during a ride and the recording is stored in a permanent memory module of the recording memory device, wherein the recording memory device is configured in such a way that, based on a trigger signal, a recording sequence stored in time immediately before the trigger signal is stored with the associated riding data in a selection memory module, in contrast to the procedure known in the prior art, in which an event lying in the future is recorded, a relevant driving event lying in the past and already recorded by the permanent recording is determined and made available to the driver as a recording sequence, i.e. in the selection memory module. i.e. stored in the selection memory module. The driver can have the recording sequence output and share it with other people. This can be done, for example, through a USB or a wireless connection, such as a WLAN or Bluetooth connection. The recording sequence comprises both the pictorial recording by the camera device and the riding data associated by the sensor device.

The recording of the driving events lying in the past can, in addition to the special, fun-related driving events, also be used for the clarification of accidents with the bicycle. For example, abrupt changes in speed can be determined from the riding data and the stored recording sequence can be generated based on this.

Preferably, a trigger module is provided in which predefined riding scenarios are stored, wherein the trigger module is configured in such a way that a predefined riding scenario is detected based on the riding data during the ride and a trigger signal is output. For example, a driving scenario can be detected based on the accelerations recorded by the sensor device. In particular, jumps or abrupt braking with the bicycle can be detected by evaluating the accelerations. The driving
scenario associated with a jump with the bicycle over a jump is defined, for example, by an initial condition, in particular an acceleration against the acceleration due to gravity, and an end condition, in particular an acceleration in the direction of the acceleration due to gravity, wherein the end condition forms the trigger signal and the recording sequence extends from the initial condition to the end condition. In this way, recordings can be made automatically and without manual interaction of the driver, which the driver can view and export after the journey.

Alternatively or additionally, a trigger element for generating a trigger signal is arranged on the bicycle frame, wherein the trigger element is, for example, a switch or button arranged on the handbar. After a particular riding event, the rider can actuate the trigger element and thus generate a trigger signal, so that a recording sequence is generated in time immediately before the trigger signal by the camera device in terms of images and recorded by the sensor device in accordance with the riding data. Thus, riding events that do not correspond to any particular riding scenario that can be recognized by the riding data can also be recorded.

The recording sequence can be defined as previously described by predefined riding data or simply by a predetermined time duration, wherein the time duration extends into the past starting from the trigger signal.

In a preferred embodiment, the recording memory device comprises a ring memory in which a plurality of temporally successive recording sections can be stored, wherein the recording sequence can be composed of a plurality of recording sections. The ring memory is configured in such a way that the recordings of the camera device and the associated riding data of the sensor device are continuously stored in a plurality of temporally successive recording sections, wherein as soon as the ring memory is full, i.e. for example after twenty recording sections, the recording sections are overwritten by later recording sections of the camera device and the riding data of the sensor device. In this way, the memory space for the permanent recording of the camera device can be reduced. The recording sections comprise a predefined time duration. Preferably, the recording sequence is formed by one or more recording sections.

Preferably, the sensor device comprises a location sensor, a speed sensor and/or an acceleration sensor. In this way, for example, riding at particular locations, in particular by means of the location sensor, or particular riding events, in particular by means of the speed sensor and/or acceleration sensor, can be determined and recorded.

Thus, a bicycle is provided with which riding events occurring during a ride with the bicycle can be reliably and completely recorded in a simple manner.

An embodiment of the invention is explained in more detail with reference to the drawing.

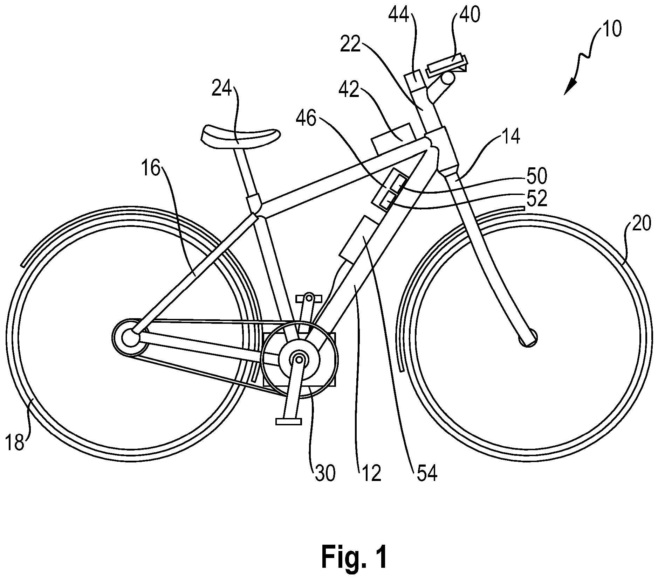

Figure 1 schematically shows a bicycle in side view.

Figure 1 shows a bicycle 10 configured as a pedelec, i.e., with pedal assist. The bicycle 10 comprises a bicycle frame 12, which comprises a structure with a down tube, a top tube, a seat post tube receiving a seat post 24 and a front fork receiving tube. Further, the bicycle frame 12 comprises a rear wheel receiving tube 16, wherein a rear wheel 18 is rotatably mounted to the rear wheel receiving assembly 16. A front fork 14 is rotatably mounted to the front fork receiving tube, wherein the front fork is non-rotatably connected to a handlebar 22 and to which a front wheel 20 is rotatably mounted. Furthermore, the bicycle 10 has a drive device 30 with two pedals arranged on a pedal crank in each case, wherein the pedal cranks are connected to a pedal crank shaft in a rotationally fixed manner. A chainring is non-rotatably arranged on the pedal crankshaft, wherein the chainring is connected to a chain sprocket of the rear wheel via a chain.

A camera device 40 is attached to the handlebar 22 in order to record visually the rides with the bicycle, in particular riding maneuvers, such as with a mountain bike in off-road terrain, wherein the camera device 40 records the environment in front of the bicycle 10. Alternatively or additionally, a camera device may also be arranged in the rear area of the bicycle 10, for example on the seat post tube, wherein the camera device is oriented such that the area behind the bicycle 10 is recorded. Furthermore, a sensor device 42 is attached to the bicycle frame 12, which comprises a location sensor, i.e. a GPS sensor, and an acceleration sensor. In addition, the sensor device 42 may further comprise a speed sensor or other sensor suitable for recording riding data.

The permanent recordings made by the camera device 40 and the riding data recorded by the sensor device 42 are stored in a recording memory device 46, wherein the recording memory device 46 comprises a permanent memory module 50 configured as a ring memory. In the ring memory, the recordings of the camera device 40 and the associated riding data of the sensor device 42 are continuously stored in a plurality of recording sections following one another in time, wherein as soon as the ring memory is full, i.e. after twenty recording sections, for example, the existing recording sections are overwritten by later recording sections of the camera device 40 and the riding data of the sensor device 42.

Furthermore, the recording memory device 46 comprises a selection memory module 52 in which selected recordings are stored. The selected shots are generated in such a way that, based on a trigger signal, a recording section stored in time immediately before the trigger signal is stored in the selection memory module 52 together with the associated riding data. The recording sequence is composed of a plurality of recording sections stored in the ring buffer in time before the trigger signal.

On the one hand, the trigger signal is automatically generated by evaluating the riding data recorded by the sensor device 42 by means of a trigger module 54 arranged on the bicycle frame 12, wherein different riding scenarios are stored in the trigger module 54 and a riding scenario lying in the past is detected as a function of predefined riding data and the selected recording sequence is generated. On the other hand, a trigger signal can be manually triggered by the driver using a trigger element 44, in particular a switch or a button. The trigger element 44 is arranged on the handlebar 22 and can be easily operated by the driver.

The recording scenarios can be read out and exported by a readout device, in particular via a USB, a Bluetooth or a WLAN connection.

In this way, a bicycle 10 is provided with which special riding events occurring during the ride with the bicycle 10 can be reliably and completely recorded in terms of images and riding data.

## Claims

1. Bicycle with
a bicycle frame (12),
a rear wheel (18) and a front wheel (20), wherein the rear wheel (18) and the front wheel (20) are rotatably mounted on the bicycle frame (12),
a camera device (40) for recording the bicycle environment during a ride,
a sensor device (42) for detecting and recording riding data, and
a recording memory device (46) for storing recordings recorded by the camera device (40) and for storing the temporally associated riding data recorded by the sensor device (42),
**characterized in that**
the recording memory device (46) comprises a permanent memory module (50), wherein the camera device (40) records permanently during a ride, and wherein the recordings made by the camera device (40) and the riding data recorded by the sensor device (42) are stored in the permanent memory module (50) of the recording memory device (46),
the recording memory device (46) further comprises a selection memory module (52) for storing selected recordings, wherein the recording memory device (46) is configured in such a way that, based on a trigger signal, a recording sequence stored in permanent memory module (50) in time immediately prior to the trigger signal is stored with the associated riding data in the selection memory module (52).

2. Bicycle according to claim 1, wherein a trigger module (54) is provided, in which predefined riding scenarios are stored, wherein the trigger module (54) is configured in such a way that, based on the riding data, a predefined riding scenario is detected during the ride and a trigger signal is automatically generated and output.

3. Bicycle according to claim 1 or 2, wherein a trigger element (44) for manually generating a trigger signal is arranged on the bicycle frame (12).

4. Bicycle according to one of the preceding claims, wherein the permanent memory module (50) of the recording memory device (46) is configured as a ring memory in which a plurality of temporally successive recording sections are continuously stored, wherein the recording sequence can be composed of one or more recording sections.

5. Bicycle according to one of the preceding claims, wherein the sensor device (42) comprises a location sensor, a speed sensor and/or an acceleration sensor.

## Patentansprüche

1. Fahrrad mit
einem Fahrradrahmen (12),
einem Hinterrad (18) und einem Vorderrad (20), wobei das Hinterrad (18) und das Vorderrad (20) drehbar an dem Fahrradrahmen (12) montiert sind,
einer Kameravorrichtung (40) zum Aufzeichnen der Fahrradumgebung während einer Fahrt,
einer Sensorvorrichtung (42) zum Erkennen und Aufzeichnen von Fahrdaten und
einer Aufzeichnungsspeichervorrichtung (46) zum Speichern von Aufzeichnungen, die von der Kameravorrichtung (40) aufgezeichnet werden, und zum Speichern der temporär zugeordneten Fahrdaten, die von der Sensorvorrichtung (42) aufgezeichnet werden,
**dadurch gekennzeichnet, dass**
die Aufzeichnungsspeichervorrichtung (46) ein Permanentspeichermodul (50) umfasst, wobei die Kameravorrichtung (40) während einer Fahrt permanent aufzeichnet, und wobei die von der Kameravorrichtung (40) vorgenommenen Aufzeichnungen und die von der Sensorvorrichtung (42) aufgezeichneten Fahrdaten in dem Permanentspeichermodul (50) der Aufzeichnungsspeichervorrichtung (46) gespeichert werden,
die Aufzeichnungsspeichervorrichtung (46) ferner ein Auswahlspeichermodul (52) zum Speichern ausgewählter Aufzeichnungen umfasst, wobei die Aufzeichnungsspeichervorrichtung (46) derart konfiguriert ist, dass, basierend auf einem Auslösesignal, eine zeitlich unmittelbar vor dem Auslösesignal in dem Permanentspeichermodul (50) gespeicherte Aufzeichnungssequenz mit den zugeordneten Fahrdaten in dem Auswahlspeichermodul (52) gespeichert wird.

2. Fahrrad nach Anspruch 1, wobei ein Auslösemodul (54) bereitgestellt ist, in dem vordefinierte Fahrszenarien gespeichert sind, wobei das Auslösemodul (54) derart konfiguriert ist, dass, basierend auf den Fahrdaten, während der Fahrt ein vordefiniertes Fahrszenario erkannt wird und automatisch ein Auslösesignal erzeugt und ausgegeben wird.

3. Fahrrad nach Anspruch 1 oder 2, wobei ein Auslöseelement (44) zum manuellen Erzeugen eines Auslösesignals an dem Fahrradrahmen (12) angeordnet ist.

4. Fahrrad nach einem der vorhergehenden Ansprüche, wobei das Permanentspeichermodul (50) der Aufzeichnungsspeichervorrichtung (46) als ein Ringspeicher konfiguriert ist, in dem kontinuierlich mehrere temporär aufeinanderfolgende Aufzeichnungsabschnitte gespeichert werden, wobei die Aufzeichnungssequenz aus einem oder mehreren Aufzeichnungsabschnitten bestehen kann.

5. Fahrrad nach einem der vorhergehenden Ansprüche, wobei die Sensorvorrichtung (42) einen Ortsbestimmungssensor, einen Geschwindigkeitssensor und/oder einen Beschleunigungssensor umfasst.

## Revendications

1. Bicyclette avec
un cadre de bicyclette (12),
une roue arrière (18) et une roue avant (20), la roue arrière (18) et la roue avant (20) étant montées de manière à pouvoir entrer en rotation sur le cadre de bicyclette (12),
un dispositif de caméra (40) pour enregistrer l'environnement de bicyclette pendant un trajet,
un dispositif capteur (42) pour détecter et enregistrer des données de trajet, et
un dispositif de mémoire d'enregistrement (46) pour stocker des enregistrements enregistrés par le dispositif de caméra (40) et pour stocker les données de trajet temporellement associées enregistrées par le dispositif capteur (42),
**caractérisée en ce que**
le dispositif de mémoire d'enregistrement (46) comprend un module de mémoire permanente (50), dans laquelle le dispositif de caméra (40) enregistre en permanence pendant un trajet, et dans laquelle les enregistrements effectués par le dispositif de caméra (40) et les données de trajet enregistrées par le dispositif capteur (42) sont stockés dans le module de mémoire permanente (50) du dispositif de mémoire d'enregistrement (46),
le dispositif de mémoire d'enregistrement (46) comprend en outre un module de mémoire de sélection (52) pour stocker des enregistrements sélectionnés, le dispositif de mémoire d'enregistrement (46) étant configuré de telle sorte que, sur la base d'un signal de déclenchement, une séquence d'enregistrement stockée dans un module de mémoire permanente (50) au moment immédiatement avant le signal de déclenchement soit stockée avec les données de trajet associées dans le module de mémoire de sélection (52).

2. Bicyclette selon la revendication 1, dans laquelle un module de déclenchement (54) est prévu, dans lequel des scénarios de trajet prédéfinis sont stockés, le module de déclenchement (54) étant configuré de telle sorte que, sur la base des données de trajet, un scénario de trajet prédéfini soit détecté pendant le trajet et qu'un signal de déclenchement soit automatiquement généré et fourni en sortie.

3. Bicyclette selon la revendication 1 ou la revendication 2, dans laquelle un élément de déclenchement (44) pour générer manuellement un signal de déclenchement est agencé sur le cadre de bicyclette (12).

4. Bicyclette selon l'une des revendications précédentes, dans laquelle le module de mémoire permanente (50) du dispositif de mémoire d'enregistrement (46) est configuré en tant que mémoire annulaire dans laquelle une pluralité de sections d'enregistrement temporellement successives sont stockées en continu, la séquence d'enregistrement pouvant être composée d'une ou de plusieurs sections d'enregistrement.

5. Bicyclette selon l'une des revendications précédentes, dans laquelle le dispositif capteur (42) comprend un capteur de localisation, un capteur de vitesse et/ou un capteur d'accélération.
